# DEMANDE DE BREVET EUROPEEN

(11) **EP 4 331 350 A1**
(43) Date de publication de la demande: **06.03.2024**
(21) Numéro de dépôt: 23180568.0
(22) Date de dépôt: 21.06.2023
(51) Int. Cl.: A01G 27/06, C05F 17/907

(54) **DISPOSITIF DE CULTURE**

(30) Priorité: 05.09.2022 FR 2208869
(71) Demandeur: Exel Industries, 51200 Epernay (FR)
(72) Inventeur: BARDEY, Marcel, 69650 QUINCIEUX (FR)
(74) Mandataire: Argyma

(57) **Abrégé**

La présente invention vise un dispositif de culture (1) comportant un bac (2) formé par une paroi latérale (3) définissant un volume de stockage présentant un fond (4), la paroi latérale (3) délimitant une ouverture (100), ledit dispositif (1) comportant une couche séparatrice (5) perméable dans ledit bac (2), ledit bac (2) étant configuré pour recevoir un liquide et pour recevoir un substrat, caractérisé en ce que, ledit dispositif (1) comporte un châssis (6) entre le fond (4) et la couche séparatrice (5), configuré pour permettre le soutènement de ladite couche séparatrice (5), et en ce que ledit dispositif (1) comporte au moins un pont de drainage (9) entre le fond (4) et la couche séparatrice (5), en contact avec ladite couche séparatrice (5), ledit pont de drainage (9) étant configuré pour permettre l'acheminement du liquide vers la couche séparatrice (5).

## Description

### DOMAINE TECHNIQUE

La présente invention concerne un dispositif de culture et en particulier un bac de culture dont le besoin d'alimentation en eau est réduit.

### ETAT DE LA TECHNIQUE

Il est connu des systèmes de bacs potagers, notamment utilisés pour cultiver des plantes ou autres végétaux.

Les systèmes connus comportent des parois latérales et une paroi de fond, lesdites parois latérales étant reliées entre elles et en regard les unes des autres, la paroi de fond reliant les parois latérales entre elles, de sorte à délimiter un bac et les parois latérales délimitant une ouverture. Le bac est configuré pour contenir un substrat, tel que de la terre, dans lequel est planté lesdites plantes ou autres végétaux.

Les systèmes peuvent être surélevés, c'est-à-dire qu'ils comportent des pieds sur lesquels sont fixés le bac, lesdits pieds permettant au bac d'être disposé à en hauteur de sorte à améliorer le confort de l'utilisateur qui pourra effectuer les opérations de jardinage en position debout.

Il est connu un bac comportant un réservoir, une conduite d'alimentation en eau configurée pour permettre l'acheminement de l'eau dans le réservoir. Ledit bac comporte en outre un lit drainant disposé dans le réservoir, ledit lit drainant étant configuré pour communiqué avec la conduite d'alimentation de sorte à emmagasiner l'eau arrivant par ladite conduite. Le bac comporte en outre une couche séparatrice perméable disposée entre le lit drainant et l'ouverture du bac. Un substrat peut être disposé sur ladite couche séparatrice, de sorte à ce qu'il y soit planté les plantes et autres végétaux. Le lit drainant comporte des billes d'argile, de sable ou de pierres configurées pour emmagasiner de l'eau. La combinaison du lit drainant avec la couche séparatrice permet d'éviter que le substrat ne baigne dans l'eau présente dans le réservoir.

Toutefois, le lit drainant de l'état de la technique ne permet pas d'emmagasiner une grande quantité d'eau, notamment à cause des matériaux des billes utilisées. Ainsi, lorsque la quantité d'eau dans le lit drainant diminue, l'alimentation en eau du substrat au travers de la couche séparatrice ne se fait pas suffisamment, le système n'est alors plus autonome en eau et l'utilisateur doit alimenter le réservoir en eau fréquemment.

Il est également connu par la demande de brevet AU 2019229339, un bac potager, représenté sur la figure 1. Dans ce document, il est décrit un bac potager comprenant un châssis de support A positionné dans un carter B. Une couche de séparation C est positionnée sur le châssis de support A de manière à diviser le bac potager en deux espaces : un espace supérieur D pour recevoir le substrat, par exemple de la terre, et un espace inférieur E pour stocker de l'eau et former ainsi une réserve d'eau. Le fait de séparer la réserve d'eau et le substrat permet d'éviter que la terre et les racines des plantes ne pourrissent en raison du surplus d'humidité. Il est ici prévu que la couche de séparation C comprenne des tubes de contention F en matériau perméable et configurés pour être emplis de substrat, qui s'étendent depuis la couche de séparation vers l'espace inférieur de manière à être en contact avec l'eau. Ces tubes de contention F permettent alors l'acheminement de l'eau du réservoir vers le substrat.

Toutefois, lors de l'utilisation prolongée dudit bac potager, le substrat contenu dans les tubes de contention est de manière permanente en contact avec l'eau, et a donc tendance à pourrir, ce qui peut entraîner une dégradation des racines des plantes qui ont pu se développer jusqu'à cette zone.

La présente invention vise donc à résoudre les problèmes susmentionnés en proposant un dispositif de culture permettant une certaine autonomie en eau tout en évitant la dégradation des plantes cultivées dans le substrat, notamment due à une trop forte exposition à l'eau.

### PRESENTATION DE L'INVENTION

Pour parvenir à ce résultat, la présente invention concerne un dispositif de culture comportant un bac formé par une paroi latérale définissant un volume de stockage présentant un fond, et délimitant une ouverture, ledit dispositif comportant une couche séparatrice perméable, disposée dans ledit bac, entre le fond et ladite ouverture, et ledit bac étant configuré pour recevoir un liquide entre ledit fond et ladite couche séparatrice et pour recevoir un substrat entre ladite couche séparatrice et ladite ouverture.

Ledit dispositif comporte en outre un châssis disposé entre le fond et la couche séparatrice, ledit châssis étant configuré pour permettre le soutènement du substrat reçu entre la couche séparatrice et l'ouverture.

Ledit châssis comporte une pluralité de compartiments, lesdits compartiments s'étendant et étant débouchant entre le fond dudit bac et ladite couche séparatrice, lesdits compartiments étant configurés pour recevoir le liquide. Des ouvertures sont par ailleurs ménagées dans le châssis, lesdites ouvertures étant configurées pour permettre de relier un compartiment à un autre compartiment, lesdites ouvertures étant en outre configurées pour permettre la circulation dudit liquide entre la pluralité de compartiments.

Ledit dispositif comporte en outre au moins un pont de drainage disposé entre la paroi de fond et la couche séparatrice, ledit pont de drainage étant en contact avec ladite couche séparatrice, ledit pont de drainage étant configuré pour permettre l'acheminement du liquide vers la couche séparatrice.

Un tel châssis permet de mettre à distance la couche séparatrice perméable du liquide, et donc le substrat du liquide. Le pont de drainage, quant à lui, relie ledit liquide à ladite couche séparatrice perméable et donc audit substrat, permettant ainsi d'acheminer le liquide vers ledit substrat. L'acheminement en liquide se fait au travers du pont de drainage de sorte à réguler la quantité de liquide dans le substrat, éviter une surabondance de liquide dans le substrat qui causerait une putréfaction dudit substrat. Un tel dispositif et en particulier un tel pont de drainage permet d'acheminer du liquide dans le substrat de manière continue et quel que soit la quantité de liquide dans le bac.

Il est précisé que par « en contact », s'agissant du pont de drainage qui est « en contact » avec la couche séparatrice, on entend que le pont de drainage peut être lié mécaniquement, par exemple tissé avec, ou non lié mécaniquement, c'est-à-dire, dans ce dernier cas, que le pont de drainage touche la couche séparatrice mais sans lui être lié mécaniquement.

Les compartiments permettent de compartimenter le liquide dans le bac. Dans lesdits compartiments peuvent s'étendre les ponts de drainage. De plus, les ouvertures reliant les compartiments entre eux permettent au liquide de passer d'un compartiment à un autre et ainsi permettre à chacun des compartiments d'être continuellement alimenté en liquide.

Avantageusement, le pont de drainage et le châssis sont solidaires, ledit pont de drainage s'étendant depuis le châssis vers la couche séparatrice.

Le pont de drainage et le châssis peuvent ne former qu'une seule et même pièce de sorte à faciliter le montage dudit dispositif potager. Alternativement, le pont de drainage est physiquement distinct du châssis.

Avantageusement, le pont de drainage est en matériau textile, ou en terre cuite ou en un matériau de type mousse absorbante.

Préférentiellement, ledit dispositif comporte une pluralité de ponts de drainage, chacun disposé entre le fond et la couche séparatrice, chaque pont de drainage étant en contact avec ladite couche séparatrice et étant configuré pour permettre l'acheminement du liquide vers la couche séparatrice.

La pluralité de ponts de drainage permet un acheminement en liquide vers le substrat à plusieurs endroits dans le bac du dispositif, de sorte à obtenir une répartition optimale de l'alimentation en liquide du substrat.

Préférentiellement, le châssis est dans un matériau de type poreux, ledit châssis étant configuré pour permettre la circulation dudit liquide entre la pluralité de compartiments.

La porosité du châssis permet au liquide de passer d'un compartiment à un autre et ainsi permettre à chacun des compartiments d'être continuellement alimenté en liquide.

Préférentiellement encore, le dispositif comporte en outre une conduite d'alimentation s'étendant depuis l'ouverture du bac au moins jusqu'au châssis, ladite conduite d'alimentation étant configurée pour permettre l'alimentation en liquide du bac.

Avantageusement, le dispositif comporte en outre au moins un dispositif modulable, ledit dispositif modulable étant fixée à la paroi latérale du bac.

Le dispositif modulable peut être par exemple un support d'outil, un hôtel à insectes, une station météo, une cloche de protection contre les animaux rampants, un indicateur de qualité de la composition du substrat, un nichoir, une mangeoire à oiseaux ou encore une serre. Ledit dispositif modulable peut ainsi être fixé sur l'une des parois latérales du bac, ou disposé au-dessus du bac par exemple.

Avantageusement, le dispositif comporte en outre un composteur, ledit composteur étant disposé entre la couche séparatrice et l'ouverture du bac, ledit composteur étant configuré pour que son contenu entre en contact avec le substrat.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1, déjà décrite, représente de façon schématique un dispositif de culture, en coupe, selon l'état de la technique ;
La figure 2 représente de façon schématique un dispositif de culture, vu en coupe, selon l'invention, le dispositif comportant un bac dans lequel est disposé un châssis, des ponts de drainage et une couche séparatrice ;
La figure 3 représente de façon schématique le dispositif, en perspective, le dispositif de la figure 2, mais sans la couche séparatrice ;
La figure 4 représente une vue en perspective du châssis ;
La figure 5 représente de façon schématique, en perspective, le dispositif de la figure 2, mais comportant en outre un dispositif modulable ;
La figure 6 représente de façon schématique, en perspective, le dispositif de la figure 2, mais comportant en outre une structure de protection disposée sur le bac du dispositif ;
La figure 7 représente de manière similaire à la figure 6, le dispositif de l'invention, mais la structure de protection étant ôtée et rangée ;
La figure 8 représente un agrandissement de la figure 6, en particulier d'un moyen d'assemblage du bac avec la structure de protection ;
La figure 9 représente de façon schématique, en perspective, le dispositif de la figure 2, mais comportant en outre un support pour composteur ; et
La figure 10 représente de manière similaire à la figure 9, le dispositif de l'invention, mais comportant en outre un composteur disposé sur le support de composteur.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne un dispositif de culture 1 comportant un bac 2 formé par une paroi latérale 3 définissant un volume de stockage et présentant un fond 4. Le bac 2 présente une ouverture 100.

Dans les modes de réalisation illustrés, le dispositif de culture 1 comporte une paroi latérale 3 et une paroi de fond 4, ladite paroi latérale 3 étant reliée par un premier bord à ladite paroi de fond 4, ladite paroi latérale et ladite paroi de fond 4 délimitant un bac 2, par un second bord, la paroi latérale 3 délimite une ouverture 100.

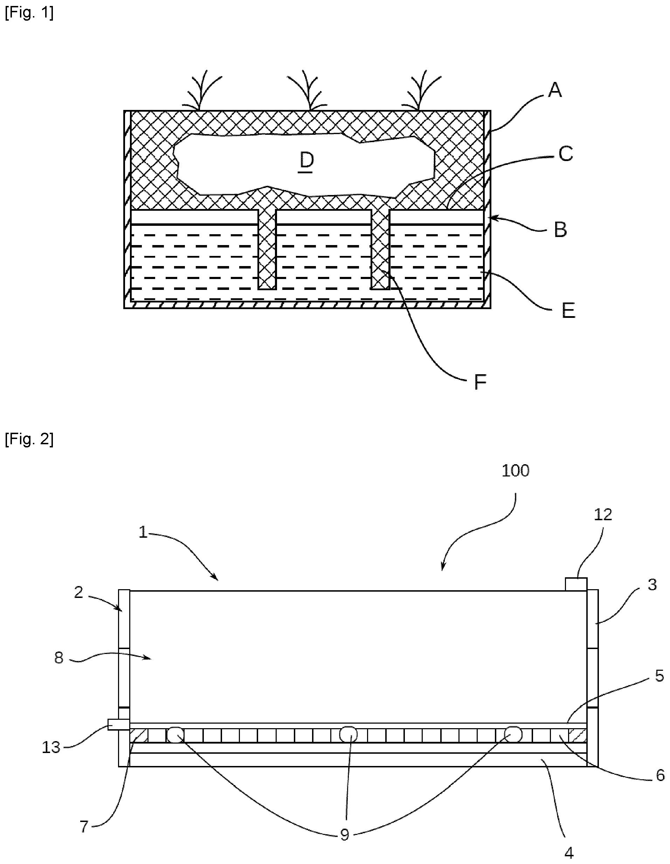

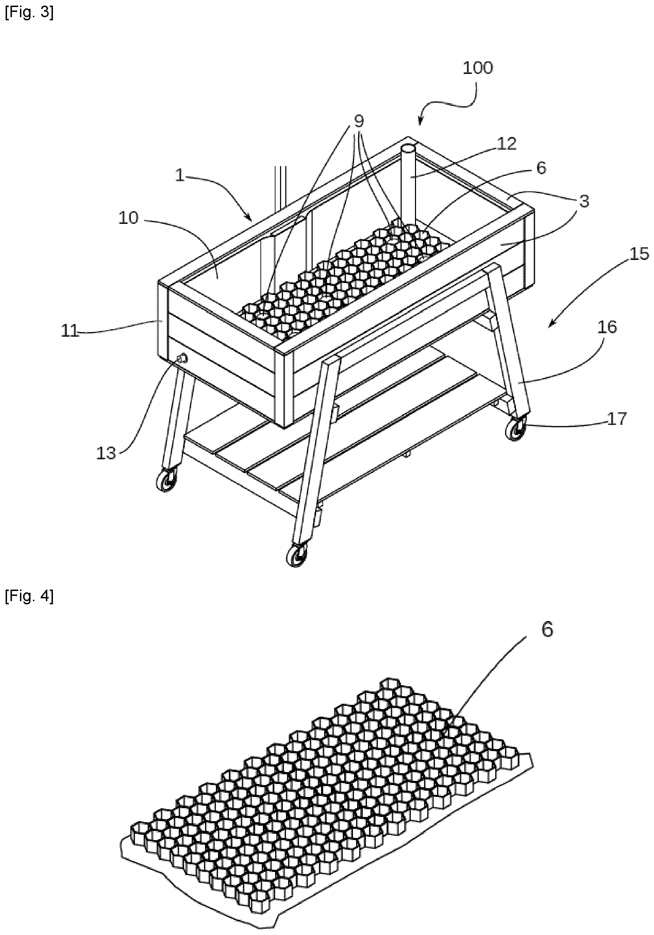

Tel que cela est représenté sur les figures 2 et 3, le dispositif de culture 1 comporte ici une première paroi, une deuxième paroi, une troisième paroi, une quatrième paroi, la première paroi étant en regard de la troisième paroi, la deuxième paroi étant en regard de la quatrième paroi, la première paroi et la troisième paroi reliant chacune la deuxième paroi et la quatrième paroi et la paroi de fond 4 reliant la première paroi, la deuxième paroi, la troisième paroi et la quatrième paroi entre elles. La première paroi, la deuxième paroi, la troisième paroi et la quatrième paroi délimite l'ouverture 100.

Avantageusement, les parois latérales et de fond sont en bois, permettant ainsi de limiter l'impact écologique, notamment en matière d'émissions de gaz carboniques. Lesdites parois peuvent être recouvertes d'une couche de revêtement 10 formant une pellicule imperméable configurée pour isoler le substrat 8 des parois 3 et 4.

Tel que représenté sur la figure 3, les parois latérales 3 sont reliées entre elles par des moyens de retenu 11. Ces moyens de retenu 11 sont configurés pour faciliter le montage du dispositif de l'invention. En particulier, lors du montage, les parois latérales 3 sont fixées entre elles par les moyens de retenu 11 et l'ensemble formé par lesdites paroi latérales 3 et les moyens de retenu 11 est positionné puis fixé sur la paroi de fond 4.

Selon un mode de réalisation de l'invention, les moyens de retenu 11 peuvent être déformables, permettant un pré-assemblage. Ces moyens de retenu 11 peuvent alors comporter un corps élastique, des charnières et/ou une nappe de textile.

En outre, le dispositif de culture 1 une couche séparatrice perméable 5, disposée dans le bac 2, entre la paroi de fond 4 et l'ouverture 100.

La couche séparatrice 5 peut être en matériau synthétique perméable, et/ou en fibre de textile synthétique.

Le bac 2 est configuré pour recevoir un liquide entre la paroi de fond 4 et la couche séparatrice 5, mais également pour recevoir un substrat 8 entre ladite couche séparatrice 5 et ladite ouverture 100.

Le dispositif de culture 1 comporte en outre un châssis 6, disposé entre la paroi de fond 4 et la couche séparatrice 5. Le châssis 6 est configuré pour permettre le soutènement de la couche séparatrice 5.

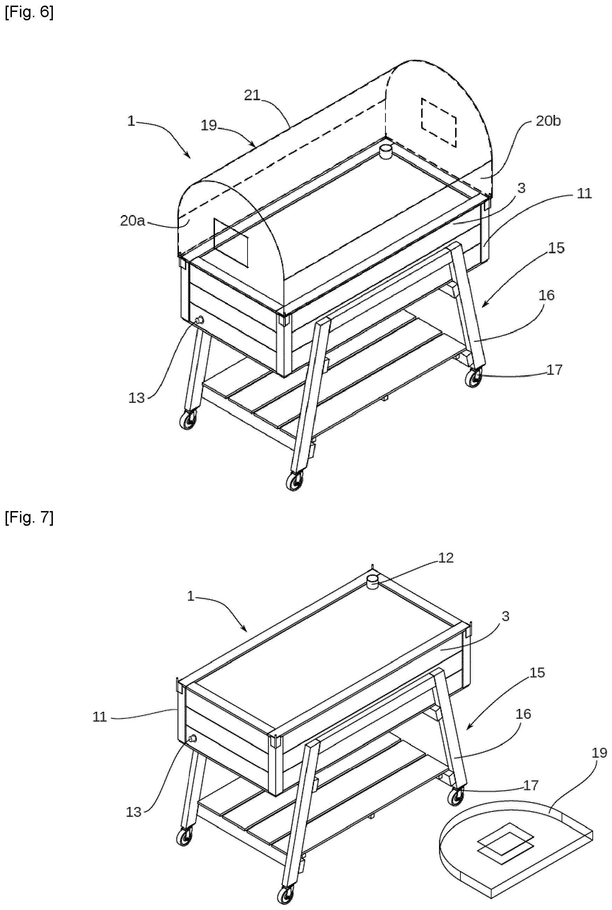

Tel que cela est rendu visible sur la figure 6, le châssis comporte ici une pluralité de compartiments. Les compartiments correspondent à des alvéoles juxtaposées les unes aux autres. Ces compartiments s'étendent entre la paroi de fond 4 et la couche séparatrice 5. Chacun de ces compartiments est débouchant entre la paroi de fond 4 et la couche séparatrice 5. Les compartiments sont configurés pour recevoir le liquide. Les compartiments présentent des portions verticales.

De plus, une ou des ouvertures peuvent être ménagées dans le châssis 6. Ces ouvertures sont configurées pour permettre de relier un compartiment à un autre compartiment. Les ouvertures sont, en outre, configurées pour permettre la circulation du liquide entre les différents compartiments. A cette fin, par exemple, des passages, notamment des perforations, peuvent être prévus dans au moins une partie des portions verticales des compartiments du châssis 6.

Aussi, le châssis 6 peut être dans un matériau de type poreux, ledit châssis étant configuré pour permettre la circulation du liquide entre la pluralité de compartiments.

A titre d'exemples, le châssis 6 peut comporter du bois, un matériau composite, une résine, ou encore des polymères. Il peut également comporter du métal.

Avantageusement encore, le châssis 6 est réalisé dans un matériau résistant, non corrosif, suite à une exposition prolongée à l'humidité et à l'air.

Le dispositif de culture 1 comporte en outre au moins un pont de drainage 9, disposé entre la paroi de fond 4 et la couche séparatrice 5. Le pont de drainage est en contact avec la couche séparatrice 5 et est configuré pour permettre l'acheminement du liquide vers la couche séparatrice 5.

Avantageusement, le dispositif de culture 1 comporte une pluralité de ponts de drainage 9, tel que cela est représenté par exemple sur la figure 3.

Ici, le dispositif de culture 1 comporte cinq ponts de drainage 9, répartis sur la surface de la paroi de fond 4 du bac 2. Chaque pont de drainage 9 est disposé entre la paroi de fond 4 et la couche séparatrice 5. Les ponts de drainage 9 sont en contact avec la couche séparatrice 5 et sont configurés pour permettre l'acheminement du liquide vers la couche séparatrice 5.

En particulier, les ponts de drainage 9 peuvent être solidaires du châssis 6 et les ponts de drainage 9 et donc s'étendre du châssis vers la couche séparatrice.

Par exemple, les ponts de drainage 9 sont en matériau textile, ou en terre cuite, ou en matériau de type mousse absorbante. Les ponts de drainage 9 peuvent être intégrés au châssis ou en être physiquement distincts.

Ainsi, de tels ponts de drainage 9, d'une part en contact avec la couche séparatrice 5 et, d'autre part, immergés dans le liquide contenu dans le bac 2, permettent l'acheminement du liquide vers la couche séparatrice 5 par capillarité. La couche séparatrice 5 étant perméable, elle permet de laisser passer le liquide dans le substrat 8, le substrat 8 reposant sur ladite couche séparatrice 5.

Selon un mode de réalisation de l'invention, les ponts de drainage 9 sont chacun disposé dans un compartiment du châssis.

Le dispositif de culture 1 comporte en outre une conduite d'alimentation 12, s'étendant depuis l'ouverture 100 du bac 2, au moins jusqu'au châssis 6. La conduite d'alimentation 12 est configurée pour permettre d'alimenter le bac 2 en liquide.

Une telle conduite d'alimentation 12, telle que représentée sur la figure 2 par exemple, permet d'alimenter le bac 2 en liquide, en particulier le fond, c'est-à-dire le volume entre la couche séparatrice 5 et la paroi de fond 4, sans avoir à mettre le liquide sur le substrat 8 contenu dans le bac, entre la couche séparatrice 5 et l'ouverture 100.

Tel que représenté sur la figure 3, le dispositif de culture 1 peut, en outre, comporter une conduite de vidange 13 configurée pour évacuer du bac 2 le liquide qu'il contient.

Avantageusement, le dispositif de culture 1 comporte une structure de surélévation 15, comportant une pluralité de pieds 16, réglables, de sorte à allonger ou réduire la hauteur du bac 2. La structure de surélévation 15 peut comporter des roues 17, chaque roue 17 étant fixée à l'extrémité d'un pied 16, de sorte à permettre la mobilité du dispositif 1.

En outre, le dispositif de culture 1 peut comporter en outre au moins un dispositif modulable, ledit dispositif modulable étant fixée à l'une quelconque de la paroi latérale et/ou de la paroi de fond 4 du bac 2.

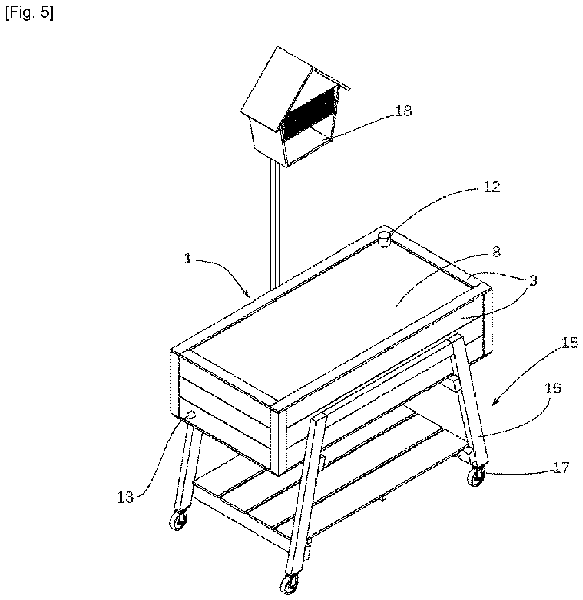

Le dispositif modulable peut par exemple être un abri à insectes 18 (figure 5), une mangeoire à oiseau, un nichoir, un piège à moustique, un hôtel à insectes, une station météo, une cloche de protection d'animaux rampants, un indicateur de la qualité de la composition du substrat ou encore une serre.

Tel que représenté sur les figures 6 à 8, le dispositif de culture 1 peut comporter, au surplus, une structure de protection 19. La structure de protection 19 comporte deux parois 20a et 20b disposées en regard l'une de l'autre et sur lesquelles est étendu un voile 21, avantageusement souple. Le voile 21 relie les deux parois 20a et 20b entre elles. Une telle structure peut être retirée et rangée. Ici, les moyens de retenu 11 peuvent être saillant des parois latérales, de sorte à coopérer avec les parois 20a et 20b afin de maintenir la structure 19 sur le bac 2.

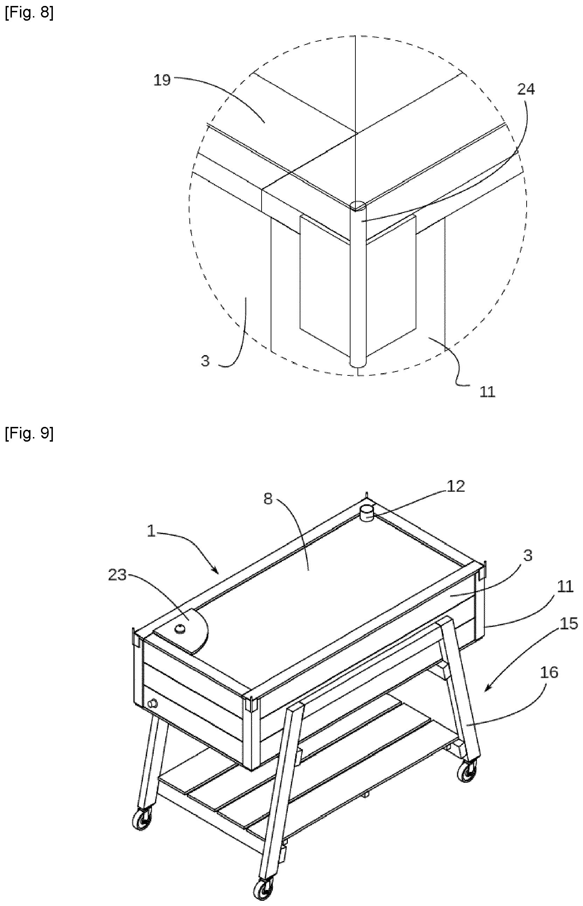

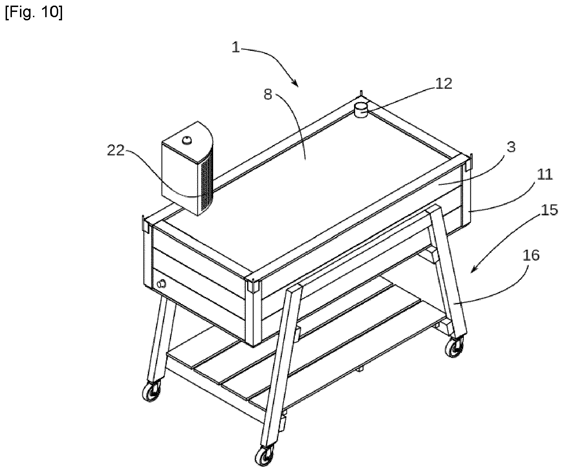

Tel que visible sur les figures 9 et 10, le dispositif de culture 1 peut comporter en outre un support 23 et un composteur 22. Le composteur 22 est ici fixé sur le support 23, lui-même fixé sur l'une des parois latérales. Le composteur 22 est configuré pour que son contenu entre en contact avec le substrat au moyen d'une paroi ajourée ou poreuse.

Selon des variantes non représentées :
- le bac peut comprendre une paroi cylindrique et une paroi de fond, ou présenter une paroi parallélépipédique comprenant plusieurs pans ; et/ou
- le bac peut être hémisphérique ou en forme de pyramide inversée par exemple ; et/ou
- les ponts de drainages peuvent être des lamelles géotextiles enroulées sur elles-mêmes, ou dans un matériau synthétique avec des caractéristiques de traction par capillarité ; et/ou
- le châssis peut comporter un maillage formé par des triangles, des parallélogrammes, ou toutes autres formes ; et/ou
- le dispositif peut comporter un capteur configurer pour détecter le niveau de liquide dans le bac, ledit capteur émettant une alerte lorsqu'un niveau critique est atteint, le capteur comportant un flotteur, une jauge et un témoin.

L'invention n'est pas limitée aux modes de réalisation précédemment décrits mais s'étend à tout mode de réalisation conforme à son esprit.

## Revendications

1. Dispositif de culture (1) comportant un bac (2) formé par une paroi latérale (3) définissant un volume de stockage présentant un fond (4), et délimitant une ouverture (100), ledit dispositif (1) comportant une couche séparatrice (5) perméable, disposée dans ledit bac (2), entre le fond (4) et ladite ouverture (100),
ledit bac (2) étant configuré pour recevoir un liquide entre ledit fond (4) et ladite couche séparatrice (5) et pour recevoir un substrat entre ladite couche séparatrice (5) et ladite ouverture (100),
**caractérisé en ce que**,
ledit dispositif (1) comporte en outre un châssis (6) disposé entre le fond (4) et la couche séparatrice (5), ledit châssis (6) étant configuré pour permettre le soutènement du substrat reçu entre la couche séparatrice (5) et l'ouverture (100), ledit châssis (6) comportant une pluralité de compartiments, lesdits compartiments s'étendant et étant débouchant entre le fond (4) dudit bac (2) et ladite couche séparatrice (5), lesdits compartiments étant configurés pour recevoir le liquide,
**en ce que**,
des ouvertures sont ménagées dans le châssis (6), lesdites ouvertures étant configurées pour permettre de relier un compartiment à un autre compartiment, lesdites ouvertures étant en outre configurées pour permettre la circulation dudit liquide entre la pluralité de compartiments,
et **en ce que**,
ledit dispositif (1) comporte en outre au moins un pont de drainage (9) disposé entre le fond (4) et la couche séparatrice (5), ledit pont de drainage (9) étant en contact avec ladite couche séparatrice (5), ledit pont de drainage (9) étant configuré pour permettre l'acheminement du liquide vers la couche séparatrice (5).

2. Dispositif de culture (1) selon la revendication précédente, **caractérisé en ce que** le pont de drainage (9) et le châssis (6) sont solidaires, ledit pont de drainage (9) s'étendant depuis le châssis (6) vers la couche séparatrice (5).

3. Dispositif de culture (1) selon l'une quelconque des revendications précédentes, **caractérisé en ce que** le pont de drainage (9) est en matériau textile, ou en terre cuite ou en un matériau de type mousse absorbante.

4. Dispositif de culture (1) selon l'une quelconque des revendications précédentes, **caractérisé en ce que** ledit dispositif (1) comporte une pluralité de ponts de drainage (9), chacun disposé entre le fond (4) et la couche séparatrice (5), chaque pont de drainage (9) étant en contact avec ladite couche séparatrice (5) et étant configuré pour permettre l'acheminement du liquide vers la couche séparatrice (5).

5. Dispositif de culture (1) selon l'une quelconque des revendications précédentes, **caractérisé en ce que** le châssis (6) est dans un matériau de type poreux, ledit châssis étant configuré pour permettre la circulation dudit liquide entre la pluralité de compartiments.

6. Dispositif de culture (1) selon l'une quelconque des revendications précédentes, **caractérisé en ce qu'**il comporte en outre une conduite d'alimentation (12) s'étendant depuis l'ouverture (100) du bac (2) au moins jusqu'au châssis (6), ladite conduite d'alimentation (12) étant configurée pour permettre l'alimentation en liquide du bac (2).

7. Dispositif de culture (1) selon l'une quelconque des revendications précédentes, **caractérisé en ce qu'**il comporte en outre au moins un dispositif modulable, ledit dispositif modulable étant fixée à la paroi latérale (3) du bac (2).

8. Dispositif de culture (1) selon l'une quelconque des revendications précédentes, **caractérisé en ce qu'**il comporte en outre un composteur (22), ledit composteur (22) étant disposé entre la couche séparatrice (5) et l'ouverture (100) du bac (2), ledit composteur (22) étant configuré pour que son contenu entre en contact avec le substrat.
